# EUROPEAN PATENT APPLICATION

(11) **EP 2 175 335 A2**
(43) Date of publication of application: **14.04.2010**
(21) Application number: 09172418.7
(22) Date of filing: 07.10.2009
(51) Int. Cl.: G05B 19/418

(54) **Operation sequence creating apparatus, method for controlling same, and program**

(30) Priority: 09.10.2008 JP 2008262567
(71) Applicant: Seiko Epson Corporation, Tokyo 163-0811 (JP)
(72) Inventor: Yamashita, Toshiki, Nagano 392-8502 (JP)
(74) Representative: HOFFMANN EITLE

(57) **Abstract**

An operation sequence creating apparatus creates an operation sequence of a workpiece processor using an industrial robot carrying a workpiece between a plurality of devices. The apparatus includes a layout view displaying section displaying a layout view where device images of the devices are laid out; a designating section designating, for each of the device images on the displayed layout view, a carry-in workpiece to be carried in and a carry-out workpiece to be carried out from each of the devices corresponding to the each device image; a carrying order creating section creating a carrying order of carrying workpieces between the devices by connecting together the devices between which the carry-in and the carry-out workpieces designated are the same; an operation step storing section storing at least one operation step corresponding to the each device image; and an operation sequence creating section creating an operation sequence based on the carrying order by selecting, from the operation step storing section, the at least one operation step including a plurality of operation steps corresponding to each device image used for the carrying-in and the carrying-out of the workpieces in the carrying order.

## Description

### BACKGROUND

### 1. Technical Field

The present invention relates to an operation sequence creating apparatus creating an operation sequence of a workpiece processor that uses an industrial robot allowing workpieces to be carried between a plurality of devices, to a method for controlling the operation sequence creating apparatus, and to a program executing the method.

### 2. Related Art

There is a conventional apparatus known as an example of the above kind of operation sequence creating apparatus (a program-creation supporting apparatus) (See JP-A-1991-327617). A user uses the operation sequence creating apparatus to create an operation sequence (a process flow) by selecting intended operation steps from a process list including a large number of operation steps (all steps executable by an industrial robot) to lay out the operation steps in a process-flow allocating region in an intended order. In the operation sequence creating apparatus, information of a target workpiece is added to the large number of operation steps included in the process list.

However, in the operation sequence creating apparatus as above, the executable operation steps are all listed in the process list, and thus, it is necessary to select an intended operation step from the large number of operation steps. In addition, selection and arrangement of the intended operation step need to be repeated by a number of operation steps to be executed. These complicate creation of the operation sequence. In addition, the workpiece processor using the industrial robot executes an operation sequence mainly based on a flow in which workpieces are carried. Thus, the above operation sequence creating apparatus needs to create the operation sequence in consideration of the carrying flow of workpieces in the processor to select the intended operation step. This makes creation of the operation sequence difficult.

### SUMMARY

An advantage of the present invention is to provide an operation sequence creating apparatus capable of facilitating creation of an operation sequence. Another advantage of the invention is to provide a method for controlling the operation sequence creating apparatus and a program executing the method.

According to a first aspect of the invention, there is provided an operation sequence creating apparatus creating an operation sequence of a workpiece processor using an industrial robot carrying a workpiece between a plurality of devices. The operation sequence creating apparatus of the first aspect includes a layout view displaying section displaying a layout view where device images of the devices are laid out; a designating section designating, for each of the device images on the displayed layout view, a carry-in workpiece to be carried in and a carry-out workpiece to be carried out from each of the devices corresponding to the each device image; a carrying order creating section creating a carrying order of carrying workpieces between the devices by connecting together the devices between which the carry-in and the carry-out workpieces designated are the same; an operation step storing section storing at least one operation step corresponding to the each device image; and an operation sequence creating section creating an operation sequence based on the carrying order by selecting, from the operation step storing section, the at least one operation step including a plurality of operation steps corresponding to each device image used for the carrying-in and the carrying-out of the workpieces in the carrying order.

According to a second aspect of the invention, there is provided a method for controlling an operation sequence creating apparatus. The method is provided to control an operation sequence creating apparatus that creates an operation sequence of a workpiece processor using an industrial robot carrying workpieces between a plurality of devices and that includes a storing section storing at least one operation step corresponding to each of the devices for the each device, a designating section, and a displaying section. The method of the second aspect includes displaying a layout view including device images of the devices by the displaying section; designating, for each of the device images on the displayed layout view, a carry-in workpiece to be carried in and a carry-out workpiece to be carried out from the each device corresponding to the each device image, by the designating section; creating a carrying order of carrying the workpieces between the devices by connecting together the devices between which the carry-in and the carry-out workpieces designated are the same; and creating an operation sequence based on the carrying order by selecting, from the storing section, the at least one operation step including a plurality of operation steps corresponding to the device of each device image used for the carrying-in and the carrying-out of the workpieces in the carrying order.

In the above aspects, when a user designates a carry-in workpiece and a carry-out workpiece for the each device image by the workpiece designating section, the operation sequence creating apparatus allows the carrying order creating section to create a carrying order based on the carry-in and the carry-out workpieces designated. Then, the operation sequence creating section creates an operation sequence based on the created carrying order. In this manner, creation of the operation sequence can be easily executed by merely designating the carry-in and the carry-out workpieces. In addition, when creating the operation sequence, the layout view is displayed to designate the carry-in and the carry-out workpieces for the each device image on the layout view. This allows the user to create the operation sequence while grasping a flow of the workpieces carried between the devices on the layout view.

Preferably, in the operation sequence creating apparatus of the first aspect, on the layout view is formed a near-device image region as a region near the each device image for the each device image; the layout view displaying section displays a workpiece list including at least two workpieces as designation candidates on the near-device image region of the each device image; and the designating section designates, for the each device image, each of the carry-in workpiece and the carry-out workpiece by selecting a single workpiece from the displayed workpiece list.

In the above structure, workpiece designation is executed by using the workpiece list displayed near the each device image. This enables the user to designate the carry-in and the carry-out workpieces easily and intuitively.

Preferably, in the operation sequence creating apparatus of the first aspect, on the layout view is formed a near-device image region as a region near the each device image for the each device image; the operation sequence creating apparatus further includes a workpiece displaying section displaying workpiece images of at least two workpieces as designation candidates for the each device image; and the designating section designates each of the carry-out workpiece and the carry-in workpiece by selecting a single workpiece image from the displayed at least two workpiece images to lay out the selected single workpiece image in a predetermined position on the near-device image region of the each device image on the layout view.

In the above structure, when designating each of the carry-in and the carry-out workpieces, an intended single workpiece image is selected from the displayed at least two workpiece images to be laid out in a predetermined position near the each device image. Thereby, the user can easily and intuitively designate the carry-in and the carry-out workpieces.

Preferably, the layout view displaying section displays workpiece images of workpieces designated as the carry-in and the carry-out workpieces on the each device image.

In the above structure, the workpiece images of the carry-in and the carry-out workpieces designated are displayed on the each device image. This enables the user to easily recognize the workpieces designated as the carry-in and the carry-out workpieces of the each device image.

Preferably, the operation sequence creating apparatus further includes a workpiece setting section setting the carry-out workpiece for an arbitrary one of the device images based on the carry-in workpiece designated for the arbitrary device image, instead of designating the carry-out workpiece by the designating section.

In the above structure, since the carry-out workpiece is automatically set based on the carry-in workpiece, the operation sequence can be more easily created. Alternatively, based on a designated carry-out workpiece, a carry-in workpiece may be set.

Preferably, the workpiece setting section sets at least two carry-out workpieces as the carry-out workpiece based on a single carry-in workpiece as the carry-in workpiece; and the carrying order creating section creates a carrying order including conditional branches based on the at least two carry-out workpieces.

In the above structure, when the user designates a single carry-in workpiece by using the designating section, the operation sequence creating apparatus allows the workpiece designating section to set at least two carry-out workpieces. Then, the carrying order creating section creates the carrying order including conditional branches based on the at least two carry-out workpieces. In other words, using the each device image as a branching point, the carrying order is created by setting the at least two carry-out workpieces as branches. For example, when two carry-out workpieces are set, the carrying order creating section creates a carrying order including two conditional branches obtained by branching in a predetermined condition. In case of three carry-out workpieces, a carrying order created includes three conditional branches as a result of branching in a predetermined condition. After that, based on the carrying order including the conditional branches, an operation sequence is created. Accordingly, the operation sequence including the conditional branches can be easily created.

A program according to a third aspect of the invention causes a computer to execute the steps included in the method for controlling an operation sequence creating apparatus according to the second aspect.

In the above structure, by merely installing the program in a computer, the steps included in the method of the second aspect can be easily executed.

### BRIEF DESCRIPTION OF THE DRAWINGS

The invention will be described with reference to the accompanying drawings, wherein like numbers reference like elements.

Fig. 1 is a system structure view of an automatic assembly system according to an embodiment of the invention.

Fig. 2 is a control block diagram showing component elements of an operation sequence creating apparatus according to an embodiment or the invention.

Fig. 3 is a functional block diagram showing steps executed by a control mechanism.

Figs. 4A and 4B are illustrations showing tree-structure data.

Fig. 5 is an illustration showing a designation screen for designating a carry-in workpiece and a carry-out workpiece.

Fig. 6 is a table showing sequence data.

Fig. 7 is a flowchart showing steps for creating an operation sequence.

Fig. 8 shows screen transition views of the designation screen in the designation of the carry-in and the carry-out workpieces.

Fig. 9 shows illustrations explaining a sequence data creating operation.

### DESCRIPTION OF EXEMPLARY EMBODIMENTS

Hereinafter, with reference to the accompanying drawings, a description will be given of an automatic assembly system obtained by applying an operation sequence creating apparatus according to an embodiment of the invention. The automatic assembly system includes a workpiece assembly apparatus to assemble a plurality of workpieces (components) and forms a single robot cell in a group of robot cells operated in connection with each other. Particularly, the automatic assembly system can intuitively and easily create an operation sequence of the workpiece assembly apparatus by using a graphical user interface (GUI) to display a layout view.

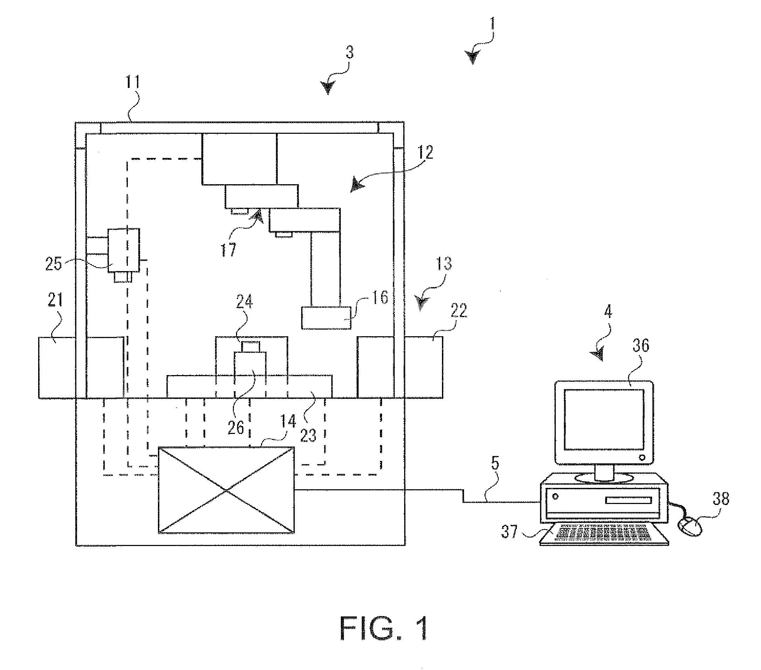

As shown in Fig. 1, an automatic assembly system 1 includes a workpiece assembly apparatus (a workpiece processor) 3 assembling a plurality of workpieces by using an industrial robot 12 and an operation sequence creating apparatus 4 creating an operation sequence of the workpiece assembly apparatus 3. The workpiece assembly apparatus 3 is connected to the operation sequence creating apparatus 4 via a LAN 5.

The workpiece assembly apparatus 3 includes a support frame 11, the industrial robot 12 suspendedly provided on the support frame 11, a unit group 13 provided on the support frame 11, and a controller 14 controlling each unit (device) of the unit group 13.

The industrial robot 12 includes an end effector 16 as a gripping portion and an articulated arm 17 moving the end effector 16 provided at a top end of the arm to an intended position (a position of each unit). The industrial robot 12 serves as a carrying section carrying a plurality of workpieces between the units. Specifically, the articulated arm 17 is driven to move the end effector 16 to a position above an arbitrary unit to drive the end effector 16 so as to grip and carry each workpiece on the unit. Preferably, the end effector 16 is removably structured so as to be changed in accordance with a kind of the workpiece. Alternatively, a plurality of end effectors 16 corresponding to a plurality of kinds of workpieces may be mounted on a single industrial robot 12.

The unit group 13 includes a feeding conveyor 21 receiving a target workpiece from an other robot cell located on an upstream side, a downstream transfer unit 22 transferring the target workpiece to an other robot cell located on a downstream side, a tray 23 supplying the target workpiece in the robot cell, an assembly unit 24 assembling two target workpieces so as to fit the workpieces together, and a first camera 25 and a second camera 26 picking up an image of each target workpiece.

The controller 14 controls driving of the industrial robot 12 and the units based on an operation sequence transmitted from the operation sequence creating apparatus 4. Specifically, the controller 14 drives the articulated arm 17 to move the end effector 16 to the units. Then, after the movement of the end effector 16 to the units, the controller 14 drives the end effector 16 to feed or remove a workpiece. In addition, the controller 14 drives each of the units to execute processings of each workpiece.

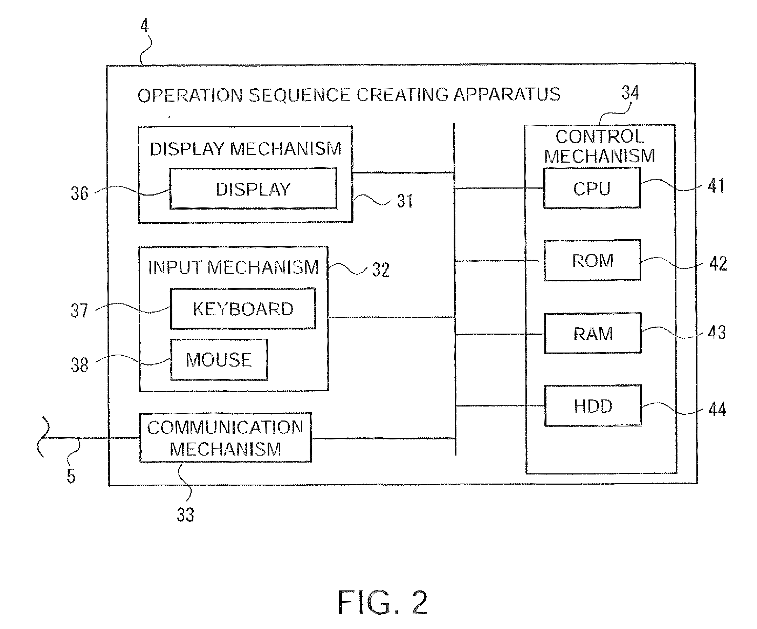

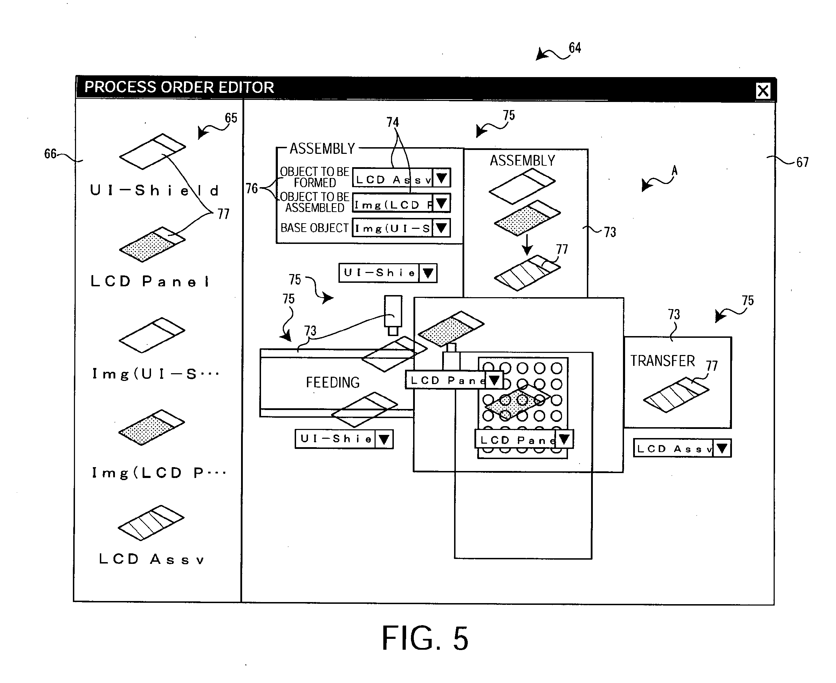

Next, the operation sequence creating apparatus 4 will be described with reference to Fig. 2. The operation sequence creating apparatus 4 allows displaying of a layout view A (See Fig. 5) to ask a user to designate of a carry-in workpiece and a carry-out workpiece for each unit so as to create an operation sequence based on the carry-in and the carry-out workpieces designated. The layout view A is a plan view virtually showing a layout region of the unit group 13. In addition, the carry-in workpiece and the carry-out workpiece, respectively, mean a workpiece to be carried in the each unit and a workpiece to be carried out from the each unit, respectively.

As shown in Fig. 2, the operation sequence creating apparatus 4 has a same structure as that of an ordinary computer and includes a display mechanism (a displaying section) 31, an input mechanism 32, a communication mechanism 33, and a control mechanism 34. The display mechanism 31 includes a display 36 to display an operation screen (a designation screen 64: See Fig. 5) associated with control of the operation sequence creating apparatus 4 and various kinds of pieces of information associated with the control. The input mechanism 32 includes a keyboard 37 and a mouse (a pointing device) 38. The communication mechanism 33 is connected to the LAN 5 to input and output information to the controller 14 of the industrial robot 12.

The control mechanism 34 includes a central processing unit (CPU) 41, a read only memory (ROM) 42, a random access memory (RAM) 43, and a hard disk drive (HDD) 44. The CPU 41 is a central processor that controls the operation sequence creating apparatus 4. The ROM 42 stores a control program that allows the CPU 42 to execute a variety of control processing, and the RAM 43 is used as a work area for the processing. The hard disk drive 44 rewritably stores a variety of data and a variety of programs. The control mechanism 34 controls the sections included in the operation sequence creating apparatus 4 by processing executed by the CPU 41 according to the programs stored in the ROM 42 and the hard disk drive 44.

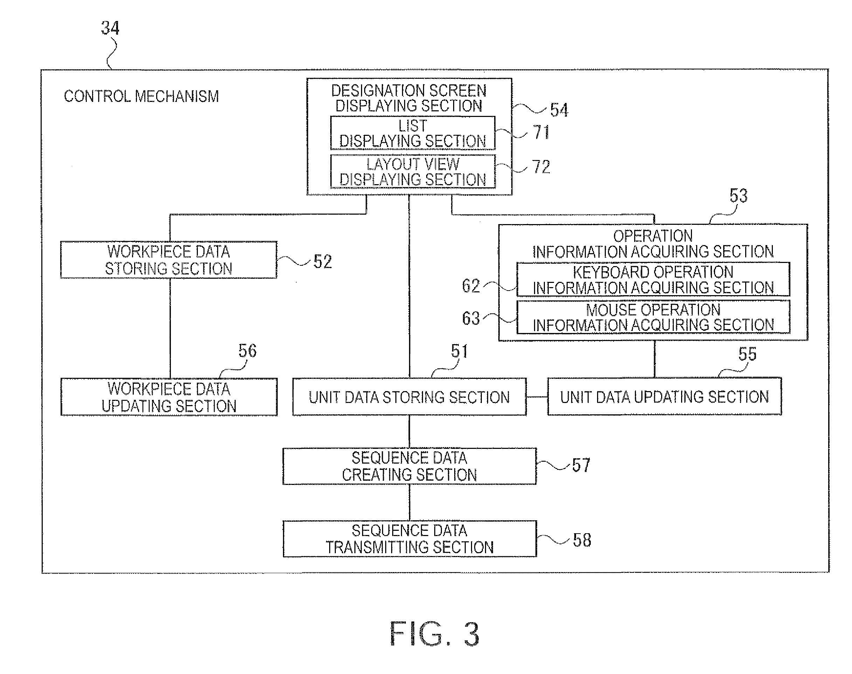

Next, the sections included in the control mechanism 34 will be described with reference to Fig. 3. As shown in Fig. 3, the control mechanism 34 includes a unit data storing section (an operation step storing section and a storing section) 51, a workpiece data storing section 52, an operation information acquiring section 53, a designation screen displaying section 54, a unit data updating section 55, a workpiece data updating section 56, a sequence data creating section (a carrying order creating section and an operation sequence creating section) 57, and a sequence data transmitting section 58. The control mechanism 34 allows the designation screen displaying section 54 to display the designation screen 64 (See Fig. 5) including the layout view A to promote a user to designate carry-in and carry-out workpieces. Then, the control mechanism 34 allows the sequence data creating section 57 to create an order of carrying by the industrial robot 12 based on a corresponding relationship of the carry-in and the carry-out workpieces designated between the units, thereby creating sequence data D2 of an operation sequence.

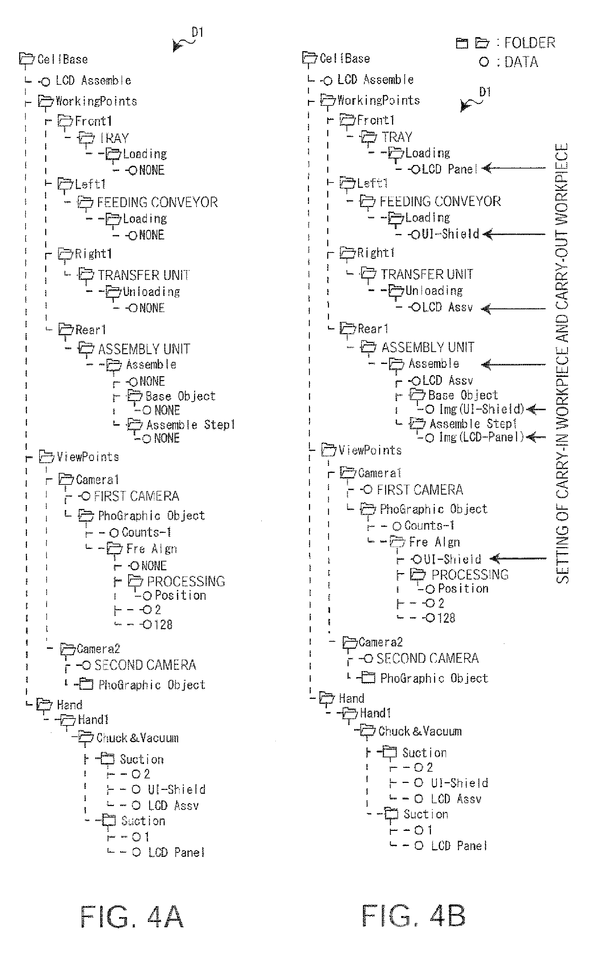

The unit data storing section 51 stores unit data corresponding to each unit, as tree-structure data D1 as shown in Figs. 4A and 4B. The tree-structure data D1 will be described below with reference to Figs. 4A and 4B. The tree-structure data D1 is created by a not-shown layout design apparatus to indicate a layout structure of each of the units (each unit of the unit group 13 and a hand unit serving as the end effector 16) included in the work assembly apparatus 3. Specifically, the tree-structure data D1 stores each unit data corresponding to each layout point candidate on the layout view A.

Fig. 4A shows the tree-structure data D1 before setting carry-in and carry-out workpieces for each unit. The tree-structure data D1 stores a root folder ("CellBase") as shown in Fig. 4A (a first layer). The folder stores a file indicating a name of the work assembly apparatus 3 ("LCD Assemble") and attribution folders of layout point candidates ("WorkingPoints", "ViewPoints", and "Hand") (a second layer). Attribution of the layout point candidate is an attribution classified in accordance with a mounting structure of each of the units. For example, layout point candidates of feeding/removing units including the feeding conveyor 21, the downstream transfer unit 22, and the tray 23 and a processing unit including the assembly unit 24 belong to the folder "WorkingPoints", and layout point candidates of camera units including the first and the second cameras 25 and 26 belong to the folder "View Points". In addition, a layout point candidate corresponding to a mounting position of the hand unit belongs to the folder "Hand".

Each attribution folder stores a folder of a layout point candidate for each attribution (such as "Front1", "Camera1", or "Hand1") (a third layer). In the folder of the layout point candidate are stored positional information (not-shown XY coordinates) of the layout point candidate and unit data of a unit laid out at the layout point candidate.

The folder of the layout point candidate of "Hand" stores a hand-unit folder ("Chuck&Vacuum") (a fourth layer). The hand-unit folder stores at least one folder corresponding to at least one gripping method, such as folders of "Check" and "Suction" (a fifth layer), and the at least one folder stores files of names of workpieces to be gripped by the gripping methods (a sixth layer).

Meanwhile, in folders of layout point candidates other than the "Hand" are stored unit data of units laid out at the layout point points. The unit data stored includes a name of the unit, a unit image (a device image) 73 representing a plan view of the unit (See Fig. 5), and an operation step data of at least one operation steps executed by the unit. In each operation step, a carry-in workpiece and a carry-out workpiece for the unit is set. In accordance with the each operation step, each operation step data stores a storage region for designating the carry-in and the carry-out workpieces for the unit (hereinafter referred to as "designation storage region"). For example, as shown in Fig. 4A, unit data of the tray stores, as the operation step data, a folder named "Loading" that means a workpiece feeding operation. Thus, a region inside the above folder becomes the designation storage region of a carry-in workpiece in the "Loading". Although a detailed description will be given later, the unit data updating section 55 allows the name of a workpiece to be stored in each designation storage region to set the carry-in and the carry-out workpieces for each unit (See Fig. 4B). When the each unit has a plurality of carry-in workpieces and a plurality of carry-out workpieces, the each unit has a plurality of designation storage regions corresponding to the workpieces. Particularly, when the unit has a plurality of designation storage regions corresponding to the plurality of carry-in workpieces, a carrying order for each of the carry-in workpieces is set for each of the designation storage regions.

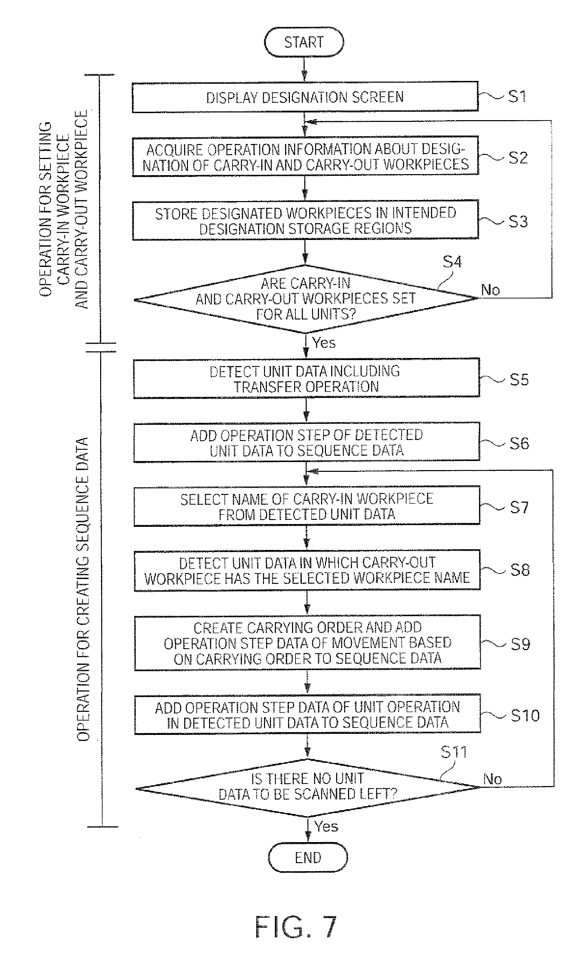

The workpiece data storing section 52 stores workpiece data relating to each workpiece included in a group of workpieces that will be designation candidates (hereinafter referred to as "group of workpiece candidates"). Each workpiece data stores a name of the each workpiece and a workpiece image 77 (See Fig. 7) representing the each workpiece. The workpiece data storing section 52 also stores new workpiece data added by the workpiece data updating section 56.

The operation information acquiring section 53 includes a keyboard operation information acquiring section 62 and a mouse operation information acquiring section 63. The keyboard operation information acquiring section 62 acquires operation information from the keyboard 37. The mouse operation information acquiring section 63 acquires operation information about the designation screen 64 based on input data from the mouse 38. Specifically, the mouse operation information acquiring section 63 acquires operation information (including information of coordinates) relating to operations such as click and drag-and-drop actions.

The designation screen displaying section 54 displays the designation screen 64 (See Fig. 5) for designating a carry-in workpiece and a carry-out workpiece on the display 36. Now, the designation screen 64 will be described with reference to Fig. 5. As shown in the drawing, the designation screen 64 includes a list display region 66 displaying an image list 65 including the group of workpiece candidates and a layout view display region 67 displaying a layout view. Specifically, as shown in Fig. 3, the designation screen displaying section 54 includes a list displaying section (a workpiece displaying section) 71 and a layout view displaying section 72, respectively, that display the display regions 66 and 67, respectively.

The list displaying section 71 selects the workpiece image 77 from workpiece data of the group of workpiece candidates stored in the workpiece data storing section 52 to create the image list 65 as a list of the workpiece image 77 so as to display the list on the list display region 66.

The layout view displaying section 72 displays the layout view A based on the tree-structure data D1 and the workpiece data of the group of workpiece candidates. The layout view displaying section 72 lays out the unit image 73 selected from the unit data in a layout structure based on the tree-structure data D1, as well as lays out a workpiece name list (a workpiece list) 74 created by selecting a workpiece name from each workpiece data of the group of workpiece candidates in a region near the unit image 73, namely, in a near-device image region 75. The workpiece name list 74 is laid out corresponding to each designation storage region. When the unit data of a unit has only one designation storage region, a single workpiece name list 74 without a title 76 is laid out for the unit. Conversely, in case of the unit data of a unit having a plurality of designation storage regions, a plurality of workpiece name lists 74 with the title 76 corresponding to the designation storage regions are laid out for the unit. In the near-device image region 75 regarding the unit image 73 of an image pickup camera, there is laid out only the workpiece name list 74 corresponding to a carry-in workpiece. Designation of a carry-in workpiece and a carry-out workpiece is executed by dragging and dropping an arbitrary workpiece image 77 on the unit image 73 (a predetermined position) from the image list 65 (a first method) or by selecting (clicking) an arbitrary workpiece name from the workpiece name list 74 (a second method). When the unit data of the unit has a plurality of designation storage regions, the arbitrary workpiece image 77 is dragged and dropped not on the unit image 73 but on the title 76 (a predetermined position) of the workpiece name list 74 corresponding to each of the designation storage regions. Thus, the input mechanism 32 and the operation information acquiring section 53 correspond to a designating section described in the appended claims.

When the carry-in and the carry-out workpieces are designated for an arbitrary unit, the layout view displaying section 72 selects the workpiece image 77 from workpiece data of each of the designated workpieces to lay out and display the workpiece image 77 on the unit image 73 for which the workpieces have been designated.

Along with designation of the carry-in and the carry-out workpieces, the unit data updating section 55 updates unit data. Specifically, first, the workpiece image 77 is dragged and dropped on the unit image 73 or on the title 76 from the image list 65 (the first method). Then, when the operation information acquiring section 53 acquires operation information about the dragging and dropping action, a workpiece name of the dropped workpiece image 77 is stored in a designation storage region corresponding to the unit image 73 or the title 76 on which the workpiece image 77 has been dropped. Meanwhile, when an arbitrary workpiece name is selected from the workpiece name list 74 (the second method) and the operation information acquiring section 53 acquires the operation information, the selected workpiece name is stored in a designation storage region corresponding to the workpiece name list 74.

Instead of a user's designation of a carry-out workpiece, based on a carry-in workpiece, the unit data updating section 55 automatically sets a carry-out workpiece (a workpiece setting section). The unit data updating section 55 performs the automatic setting processing based on the carry-in workpiece in a manner corresponding to an operation step. For example, when a fitting-together operation "Assemble" of the assembly unit 24 is intended, workpiece data obtained by processing two carry-in workpieces are selected from pre-stored workpiece data of post-processed workpieces to set up the workpiece data for a carry-out workpiece. Meanwhile, when an image pickup operation ("PreAlgn") of the first camera 25 or the second camera 26 is intended and a carry-in workpiece is "UI-Shield", a new workpiece name ("Img(UI-Shield") indicating the workpiece after image-pickup is created to be set to a carry-out workpiece.

The workpiece data updating section 56 adds a workpiece selected by the automatic setting by the unit data updating section 55 or a newly created workpiece to the workpiece group of the workpiece data storing section 52. When the workpiece data is selected, the workpiece data updating section 56 adds the selected workpiece data, as new workpiece data, to the workpiece group of the workpiece data storing section 52. Meanwhile, in case of creation of a new workpiece, the workpiece image 77 of one of the carry-in workpieces as a source of the new workpiece is set as the workpiece image 77 of the new workpiece to create workpiece data by using the workpiece image 77 of the new workpiece and a created workpiece name. Then, the created workpiece data is added as new workpiece data to the workpiece group of the workpiece data storing section 52.

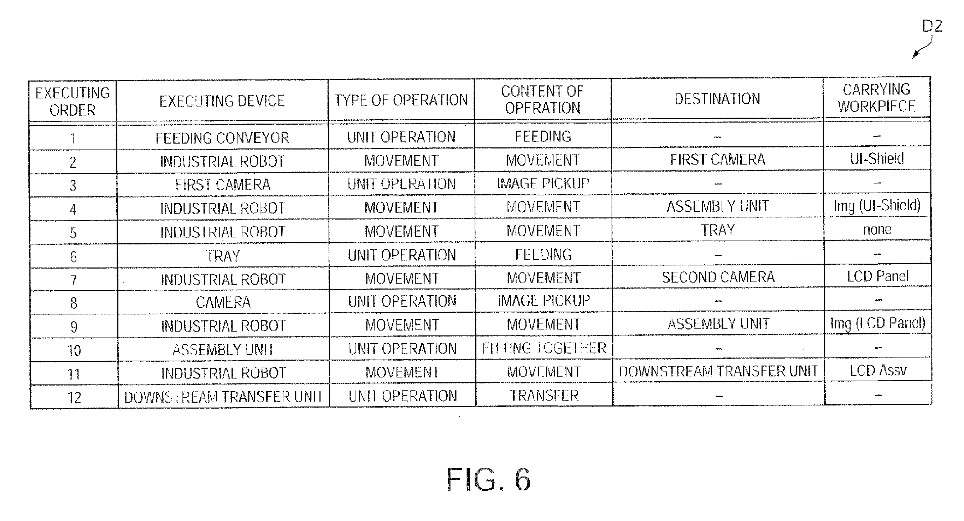

The sequence data creating section 57 creates a carrying order based on a corresponding relationship of the carry-in and the carry-out workpieces between the devices, and then creates sequence data D2 (See Fig. 6). As shown in Fig. 6, the sequence data D2 is array data including operation step data of a movement operation for moving the end effector 16 by the industrial robot 12 and operation step data of unit operations executed by units. The sequence data creating section 57 connects together devices between which the designated carry-in workpiece and the designated carry-out workpiece are the same to create a carrying order for carrying workpieces between the devices. Then, based on the carrying order created, the sequence data creating section 57 adds the operation step data of the movement operation and the operation step data of the unit operations to the sequence data D2 to create sequence data D2.

The sequence data transmitting section 58 transmits the created sequence data D2 of the operation sequence to the work assembly apparatus 3 (the controller 14).

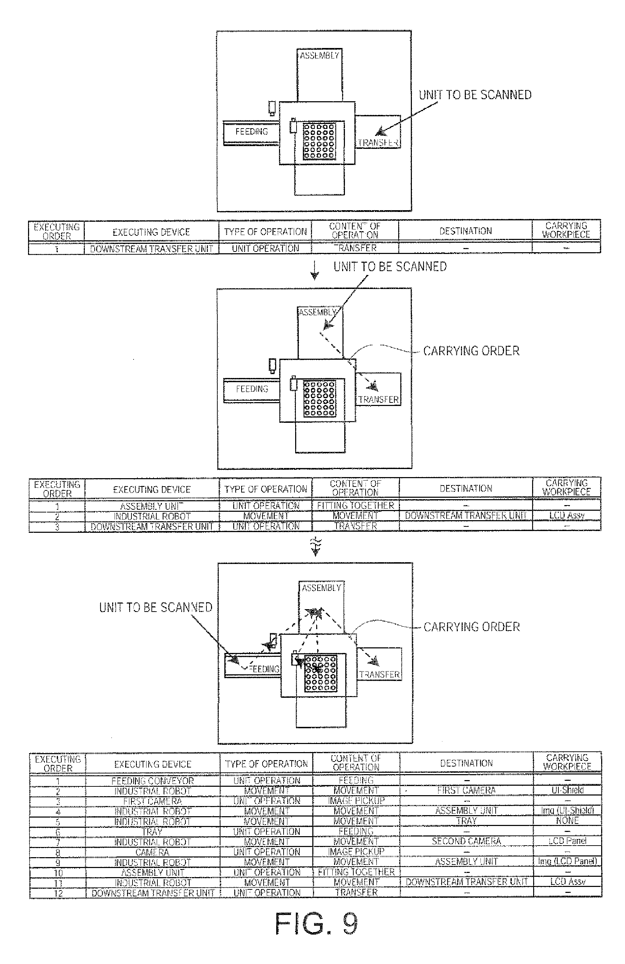

Next, the operation sequence creating operation will be described with reference to Figs. 7 to 9. As shown in Fig. 7, the operation sequence creating operation includes an operation for setting a carry-in workpiece and a carry-out workpiece for each unit by a user's designation of the carry-in and the carry-out workpieces for the each unit (S1 to S4) and an operation for creating the sequence data D2 based on the carry-in and the carry-out workpieces set (S5 to S11).

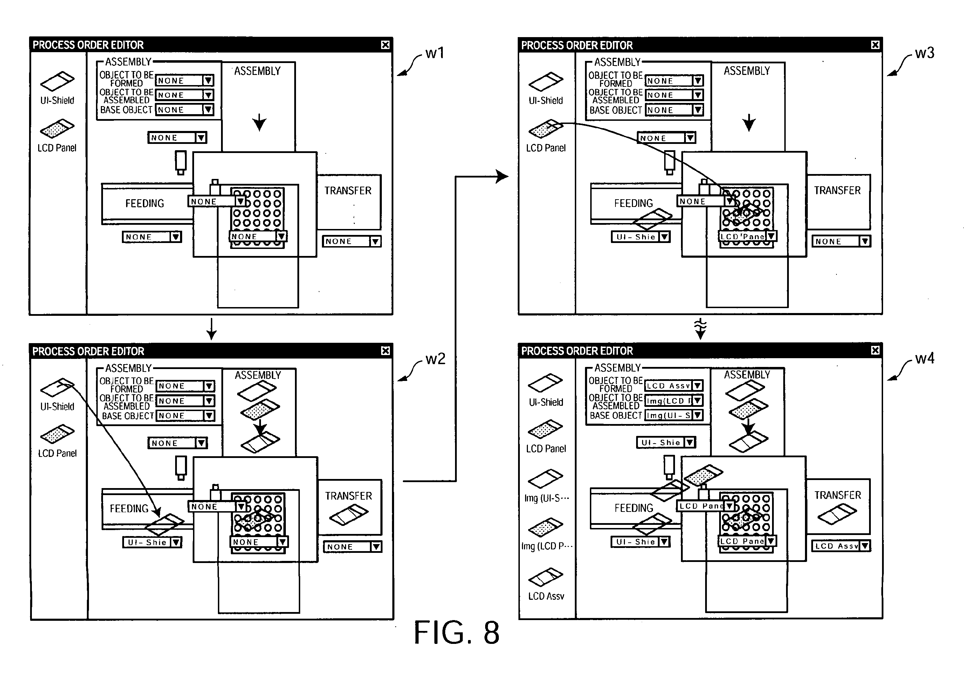

As shown in Fig. 7, in the operation for setting the carry-in and the carry-out workpieces, first, the control mechanism 34 allows the designation screen displaying section 54 to display the designation screen 64 based on the tree-structure data D1 and workpiece data (S1) (See W1 in Fig. 8). Following the displaying of the designation screen 64, the user sequentially designates the carry-in workpiece and the carry-out workpiece of each unit to set the carry-in and the carry-out workpieces for the each unit (See W1 to W4 in Fig. 8).

Specifically, the user designates the carry-in and the carry-out workpieces for each unit, and then, the operation information acquiring section 53 acquires the operation information (S2). Based on that, the unit data updating section 55 stores a workpiece name of each of the designated workpieces in an intended designation storage region (S3). In other words, the user drags and drops the workpiece image 77 on the unit image 73 or on the title 76 from the image list 65 (the first method). When the operation information acquiring section 53 acquires the operation information of the dragging and dropping, the unit data updating section 55 stores the workpiece name of the dropped workpiece image 77 in a designation storage region corresponding to the unit image 73 or the title 76 on which the workpiece image 77 has been dropped. Meanwhile, when an arbitrary workpiece name is selected from the workpiece name list 74 and the operation information acquiring section 53 acquires the operation information, the selected workpiece name is stored in a designation storage region corresponding to the workpiece name list 74. The operations (S2 to S3) are repeated to set carry-in and carry-out workpieces of all units (S4: Yes). Next will be the sequence data creating operations.

The sequence data creating operation creates the sequence data D2 by scanning unit data in a reverse order to the carrying order. In the sequence data creating operation, first, the control mechanism 34 detects unit data including an operation for removing a workpiece from a robot cell (a transfer operation "Unloading" in the embodiment), from the unit data of the tree-structure data D1 (S5). After detecting the unit data including the transfer operation, the control mechanism 34 adds at least one operation step data stored in the unit data to the sequence data D2 (S6).

Then, from the unit data, the control mechanism 34 selects the workpiece name of the carry-in workpiece (S7). After selecting the workpiece name thereof, in order to detect a source unit from where the carry-in workpiece is transferred, the control mechanism 34 detects unit data in which the carry-out workpiece corresponds to the selected workpiece name (S8). Thereby, a unit as the transfer source of the carry-in workpiece and a unit as the transfer destination are determined. After the determination of the source unit and the destination unit, the units are connected together to create a carrying order. Then, based on the created carrying order, the operation step data of movement operation by the industrial robot 12 is created to be added to a front part of the sequence data D2 (S9). After the addition of the operation step data of the movement operation, the operation step data of the unit operation is selected from the detected unit data to be added to the front part of the sequence data D2 (S10).

Thereafter, the control mechanism 34 scans the unit data in a manner reverse to the carrying order by repeating detection of a transfer source unit of a carry-in workpiece (S7 to S8), creation of a carrying order and addition of operation step data of movement operation based on the carrying order (S9), and addition of operation step data of a unit operation in the detected unit data (S10). When scanning a unit having two or more carry-in workpieces, the control mechanism 34 scans a carrying order of a carry-in workpiece in a designation storage region, in which a rank in an executing order is a lowest. If the scanning reaches a unit having no carry-in workpiece, the control mechanism 34 scans a carrying order of a carry-in workpiece in which the rank in the executing order is a second lowest. In short, the carrying order is scanned in the reverse order to the executing order. With the scanning as above, the sequence data D2 is created in the reverse order to the executing order, thereby resulting in creation of complete sequence data D2. Then, when there is no unit to be scanned left (S11: No), the sequence data creating operation is ended. The operation sequence created above (the sequence data D2) is transmitted to the industrial robot 12 by the sequence data transmitting section 58.

Next, a description will be given of an operation sequence creating apparatus 4 according to a modification of the embodiment by focusing only on a part particularly different from the embodiment. The operation sequence creating apparatus 4 of the modification creates an operation sequence including a branch.

The control mechanism 34 allows the unit data storing section 51 to store the unit data storing operation step data of an operation step including a conditional branch. The operation step data stores a designation storage region of a single carry-in workpiece and designation storage regions of two carry-out workpieces. Meanwhile, when the carry-in workpiece of the unit is designated, the unit data updating section 55 creates workpiece names of two workpieces after a conditional branch to set up the workpiece names to two carry-out workpieces. For example, when storing operation step data of a checking operation for checking quality (good or poor) of a workpiece by the first camera 25 and designating "UI-Shield" as a carry-in workpiece for the first camera 25, the unit data updating section 55 creates workpiece names: "Good (UI-Shield)" and "Bad (UT-Shield)", respectively, indicating workpieces judged to be good and poor, respectively, in quality to set the names to the two carry-out workpieces. Based on that, in the sequence data creating operation, the sequence data creating section 57 creates a carrying order by adding the conditional branch using the unit as a branching point, thereby creating an operation sequence including the conditional branch. In this structure, the conditional branch-including operation sequence can be easily created.

As described above, the automatic assembly system 1 of the present embodiment can facilitate creation of an operation sequence by merely designating a carry-in workpiece and a carry-out workpiece. Additionally, in creation of the operation sequence, the layout view A is displayed to designate the carry-in and the carry-out workpieces for each unit image 73 on the layout view A. This allows a user to create the operation sequence while grasping the flow of the workpieces carried between the units on the layout view A.

In addition, to designate the carry-in and the carry-out workpieces, the first method uses the workpiece name list 74 displayed near each device image. Thereby, the carry-in and the carry-out workpieces can be easily and intuitively designated.

Furthermore, as the second method for designating each of the carry-in and the carry-out workpieces, an intended single workpiece image 77 is selected from the displayed two or more workpiece images 77 (the image list 65) to be laid out in a predetermined position near each unit image 73 (on the unit image 73 or on the title 76). Accordingly, designation of the carry-in and the carry-out workpieces can be easily and intuitively executed.

Still furthermore, since the workpiece images 77 of the designated carry-in and the carry-out workpieces are displayed on the each unit image 73, the workpieces designated as the carry-in and the carry-out workpieces of the each unit image 73 can be easily recognized.

In addition, instead of designation of a carry-out workpiece, based on a designated carry-in workpiece, the unit data updating section 55 can set the carry-out workpiece of the unit image 73. Thus, the carry-out workpiece corresponding to the carry-in workpiece is automatically set. Thereby, the operation sequence creating operation can be more easily executed. Conversely, based on a designated carry-out workpiece, a carry-in workpiece may be set.

Although it is not described in the embodiment, in case of a layout designation of carry-in and carry-out workpieces in an inexecutable carrying order (e.g. there is no carry-out workpiece having a same workpiece name as that of a designated carry-in workpiece), an error message is displayed on the display 36 to recommend change in layout of the carry-in and the carry-out workpieces.

## Claims

1. An operation sequence creating apparatus creating an operation sequence of a workpiece processor using an industrial robot carrying workpieces between a plurality of devices, the operation sequence creating apparatus comprising:
a layout view displaying section displaying a layout view where device images of the devices are laid out;
a designating section designating, for each of the device images on the displayed layout view, a carry-in workpiece to be carried in and a carry-out workpiece to be carried out from each of the devices corresponding to the each device image;
a carrying order creating section creating a carrying order of carrying workpieces between the devices by connecting together the devices between which the carry-in and the carry-out workpieces designated are the same;
an operation step storing section storing at least one operation step corresponding to the each device image; and
an operation sequence creating section creating an operation sequence based on the carrying order by selecting, from the operation step storing section, the at least one operation step including a plurality of operation steps corresponding to each device image used for the carrying-in and the carrying-out of the workpieces in the carrying order.

2. The operation sequence creating apparatus according to Claim 1, wherein on the layout view is formed a near-device image region as a region near the each device image for the each device image; the layout view displaying section displays a workpiece list including at least two workpieces as designation candidates on the near-device mage region of the each device image; and the designating section designates, for the each device image, each of the carry-in workpiece and the carry-out workpiece by selecting a single workpiece from the displayed workpiece list.

3. The operation sequence creating apparatus according to Claim 1, wherein on the layout view is formed a near-device image region as a region near the each device image for the each device image; the operation sequence creating apparatus further includes a workpiece displaying section displaying workpiece images of at least two workpieces as designation candidates for the each device image; and the designating section designates each of the carry-in workpiece and the carry-out workpiece by selecting a single workpiece image from the displayed at least two workpiece images to lay out the selected single workpiece image in a predetermined position on the near-device image region of the each device image on the layout view.

4. The operation sequence creating apparatus according to Claim 1, wherein the layout view displaying section displays workpiece images of workpieces designated as the carry-in and the carry-out workpieces on the each device image.

5. The operation sequence creating apparatus according to Claim 1 further includes a workpiece setting section setting the carry-out workpiece for an arbitrary one of the device images based on the carry-in workpiece designated for the arbitrary device image, instead of designating the carry-out workpiece by the designating section.

6. The operation sequence creating apparatus according to Claim 5, wherein the workpiece setting section sets at least two carry-out workpieces as the carry-out workpiece based on a single carry-in workpiece as the carry-in workpiece; and the carrying order creating section creates a carrying order including conditional branches based on the at least two carry-out workpieces.

7. A method for controlling an operation sequence creating apparatus that creates an operation sequence of a workpiece processor using an industrial robot carrying workpieces between a plurality of devices and that includes a storing section storing at least one operation step corresponding to each of the devices for the each device, a designating section, and a displaying section, the method comprising:
displaying a layout view including device images of the devices by the displaying section;
designating, for each of the device images on the displayed layout view, a carry-in workpiece to be carried in and a carry-out workpiece to be carried out from the each device corresponding to the each device image, by the designating section;
creating a carrying order of carrying the workpieces between the devices by connecting together the devices between which the carry-in and the carry-out workpieces designated are the same; and
creating an operation sequence based on the carrying order by selecting, from the storing section, the at least one operation step including a plurality of operation steps corresponding to the device of each device image used for the carrying-in and the carrying-out of the workpieces in the carrying order.

8. A program causing a computer to execute the steps included in the method for controlling an operation sequence creating apparatus according to Claim 7.
